# EUROPEAN PATENT SPECIFICATION

(11) **EP 2 602 384 B1**
(45) Date of publication and mention of the grant of the patent: **13.12.2017**
(21) Application number: 12192715.6
(22) Date of filing: 15.11.2012
(51) Int. Cl.: B65H 51/22, B65H 63/06, D06H 3/08, G01N 21/89

(54) **METHOD FOR DETECTION OF APPEARANCE CHARACTERISTICS OF A YARN IN PLANE AND A DEVICE TO PERFORM THE METHOD**
VERFAHREN ZUR DETEKTION VON EIGENSCHAFTEN EINES GARNES IN DER EBENE UND VORRICHTUNG ZUR DURCHFÜHRUNG DES VERFAHRENS
PROCÉDÉ DE DÉTECTION DES CARACTÉRISTIQUES D'ASPECT D'UN FIL DANS LE PLAN ET DISPOSITIF POUR LA MISE EN OEUVRE DE LA MÉTHODE

(30) Priority: 05.12.2011 CZ 20110788
(43) Date of publication of application: 12.06.2013
(73) Proprietor: VÚTS, a.s., Liberec XI - Ruzodol I 460 01 Liberec (CZ); Technicka Univerzita v Liberci, 461 17 Liberec (CZ)
(72) Inventor: Srámek, Rudolf, 46014 Liberec (CZ); Koukolíková, Ludmila, 46311 Liberec (CZ); Beran, Leos, 46604 Jablonec nad Nisou (CZ); Horcicka, Jirí, 46010 Liberec (CZ)
(74) Representative: Musil, Dobroslav

(56) References cited:
- GB-A- 2 249 832
- JP-A- 61 225 609
- US-A- 4 276 910
- US-A- 5 420 439
- US-A1- 2010 157 301

## Description

### Technical field

The invention relates to the method for detection of appearance characteristics of a yarn in plane containing a row of sections of the yarn, which are arranged side by side next to each other.

The invention also relates to the device for detection of appearance characteristics of the yarn in plane containing a row of sections of the yarn, which are arranged side by side next to each other. The device is comprised of a supply reel with yarn supply, a laying surface for yarn scanning and a control unit, and it is at least partially arranged in a base frame.

### Background art

During studying of appearance and/or quality of a spun (staple) yarn, which is performed in laboratories and testing laboratories or in spinning works, there is an effort to evaluate a material unevenness or defects of the yarn, which are represented e.g. by thin or thick places, or naps or their density. Further, hairiness, diameter and/or fouling of the yarn are evaluated.

It is enabled for instance by the device according to the document US6744498B2 which is concerned with the method for detection of presence of foreign fibres and other impurities in a linear running yarn, said method comprises several sequential steps. In a matter of detection of produced yarn characteristics, it is only possible to make a virtual image of fabric or knit, made of the yarn, by an expert estimation.

The measurements are performed contactlessly on the individual yarn. They can use different principles - e.g. capacitive or optical. According to results of the measurements, the yarn is assorted for further use with respect to its strength (narrowed places) and technological eligibility (material unevenness, naps). However, from the point of view of use of the yarn for fabric production, overall appearance of the yarn in plane is of great importance too. It is actually advantageous to predict appearance of the plane image of fabric or knit before the production. Appearance of plane fabric can be disturbed by unwanted unlikeness of individual yarns arranged side by side in fabric. The established method for assessment of appearance of the yarn in plane is represented by assessing of a certain length of the yarn wound on the board in many turns side by side of each other with the required pitch. The assessment is performed by comparative standards on the basis of the evaluator's subjective rating. Although the method is illustrative, it is also time-consuming and resulting only in a subjective impression of the examined sample, which can vary with another comparing.

Based on measurements of unevenness of individual yarns, diameter of a yarn, or hairiness of a yarn, it is possible to simulatedly create appearance of yarns arranged side by side in plane.

In the patent document EP578 975, there is the method for simulation specified, where the individual yarn is measured, then its parameters are recalculated to shades of grey and these values are assigned to pixels to create an image of appearance of the yarn sections arranged side by side in plane.

According to the document EP904 532, the simulation of fabric appearance is created based on the measured yarn and the referential yarn, and the resulting images of appearance are compared against each other.

In these cases, results are influenced partly by the yarn measurement method itself, partly by the method of simulation implementation. The created image is just an image based on numerical modelling and it is usually far off reality. Furthermore, the outputs (images) acquired from individual simulations are difficult to compare among themselves. From the JP61086370A, the method for assessment of the reel surface is known, where the reel is wound lengthwise, in the direction of reel's axis of rotation, yet the assessment tracks sequentially one yarn from the surface layer of the winding. Additionally, the use of results is negatively influenced by the base, which is created of the yarn winding below the observed layer of the yarn.

From the US2010157301 A1, the method for assessment of the plane surface is known, where the plane surface is created from many side by side running yarns, sourced from different windings or different operation units of a textile machine, to detect defects in individual yarns for the analysis of correct operation of a production device.

According to the solution of the DE4131664, (US5420439 A) the produced yarn is wound on two parallel cylinders in the way that a row of straight, side by side arranged yarn sections is created and the sections are lit up and scanned by a camera. In the area underlying the yarn, there is a base surface arranged, which represents contrast background. There are gaps between individual yarn sections not to neglect diametral defects of the yarn. An advantage is that in the field of vision of the scanning camera, there are approximately 3 meters of the yarn at the same time. The purpose of the device is to replace gravimetric methods of yarn unevenness detection. It is also possible to use the device in the way that, instead of a yarn, fabric or knit is inserted from the reel to the device and scanned. Direct creation of the real image of fabric, based only on knowledge of yarn properties, is not possible with the device.

Up to now, the yarn is wound on the test board in parallel turns to create an image of appearance of the yarn in plane of fabric, which should be made of the certain yarn. After winding of the board, the plane, constituted from the turns, is assessed in terms of appearance and is compared with the standards. The device is intended for testing laboratories and the like. In this way the yarn is assessed according to the ASTM D 2255-09 (Standard Test Method for Grading of Spun Yarns for Appearance). Such test is long-lasting and moreover, is not objective enough.

The goal of the invention is to watch one continual yarn, i.e. the yarn coming from one source, and to compare the complete plane image created from several side by side arranged real sections of it. At the same time, such yarn evaluation should be fast and reliable with, if possible, reduction of subjective impressions and of course it should not be disproportionately expensive.

### Principle of the invention

The goal of the invention is achieved by the method for detection of appearance characteristics of yarn in plane, the principle of which consists in the fact that the line scanner scans an image of row of yarn windings running in the one layer on the scan drum, onto which the yarn is lead continually from one source and, at the same time, the yarn is lead away from the drum.

Like this it is possible to continuously monitor many parallel yarn sections lead from one source to the scanning element, which provides an objective image of a plane structure made of one yarn.

For yarn motion, at least one motor drive in the yarn path before the scan drum, the motor drive of the scan drum, and, at least for certain time, one motor drive in the yarn path behind the scan drum, move the yarn. This enables that the amount of yarn lead to the area of image scanning is the same as the amount of yarn lead from this area.

The scan drum is driven at constant speed and, at the same time, tension of the incoming yarn in the area between the yarn supply and the scan drum is kept constant by controlling of supply reel speed. It helps the image of the scanned yarn sections to stabilize and it also reduces risk of a yarn break.

The yarn is wound on the scan drum in a helix, the pitch of which is bigger than the diameter of the wound yarn. So, the yarn surface on the scan drum is not deformed by mutual contact of the adjacent yarn sections.

Information of the scanned image is sourced to the computer, where it is processed. Besides subjective evaluation of the scanned image of the yarn in plane, with computer processing, it is possible to acquire objective evaluation of comparable results of monitoring.

The goal of the invention is also achieved by the device for detection of appearance characteristics of yarn in plane, the principle of which consists in the fact that the laying surface for yarn scanning is represented by the surface of the rotating scan drum, which is spirally wrapped by several turns of the monitored yarn and coupled to the drive, and, at the same time, adjacent to the circuit of the scan drum, parallel to the axis, there are the light source and the optical line scanner of reflected light arranged, before the scan drum, there are yarn feed means arranged and behind the scan drum, there are yarn draw-off means arranged.

A substantial advantage lies in the fact that the device according to the invention makes it possible to acquire the image of a row of yarn sections in plane made of single yarn sourced from one supply and, at the same time, it is possible to objectively evaluate the image.

A means for yarn feeding is represented by the feed mechanism coupled to the driving electric motor and a means for yarn drawing-off is represented by the draw-off mechanism coupled to the driving electric motor. So, it is possible to make use of mechanisms known in domain of textile machines and devices.

The light source, the line scanner, the electric motor of the supply reel drive, the electric motor of the feed mechanism drive, the electric motor of the draw-off mechanism drive, the electric motor of the scan drum drive, the sync encoder, the yarn tension sensor and the wrapping height sensor are connected to the control unit which is the computer linked with.

A substantial merit of the device lies in the fact that it is possible to detect appearance of many yarn sections at the same time and so it is possible to objectively assess appearance of the yarn in plane made of one yarn only. This provides good preconditions for assessment of real resulting fabric composed from the yarn turns placed side by side in the described manner. In combination with use of conventional computer technology, it is possible to very quickly acquire comparison of the monitored yarn with the standard, or it is possible to compare appearance and/or quality of yarns produced by different technologies, from different materials and suchlike, and to further evaluate the image of appearance of the yarn.

### Description of the drawings

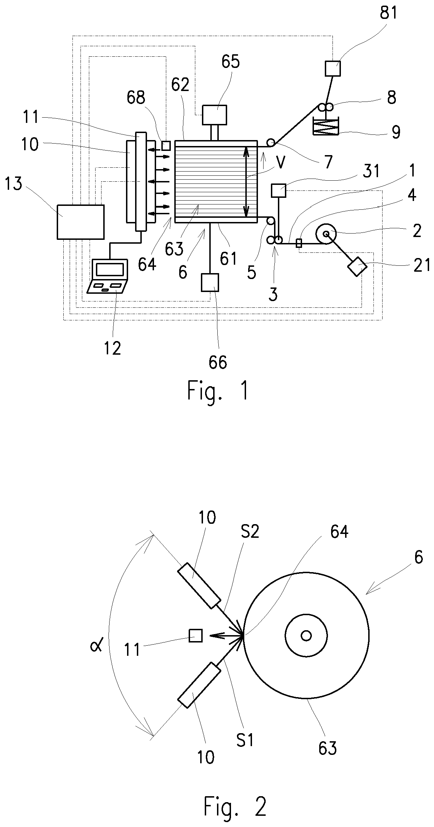

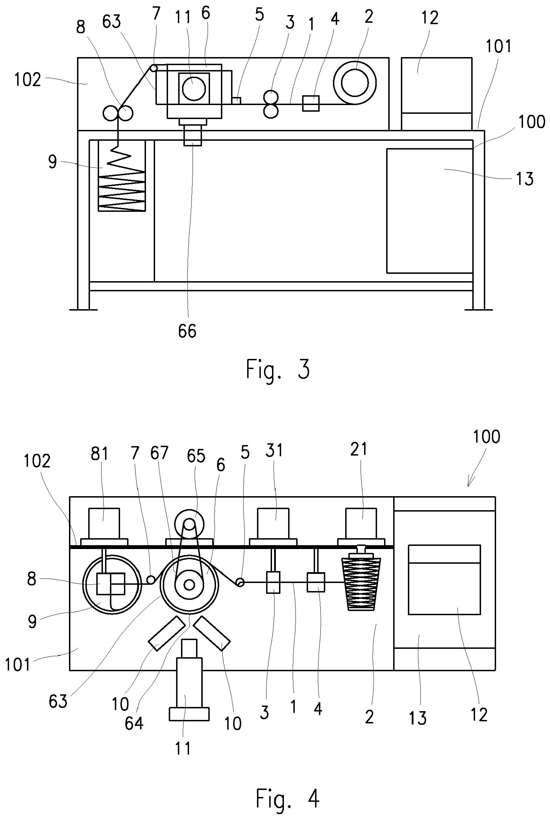

Examples of embodiments of the device according to the invention are depicted in the drawing, where the Fig. 1 represents the block diagram of arrangement of individual means in the front view, the Fig. 2 represents the plan view of the image scanning means form the Fig. 1, Fig. 3 represents the front view of arrangement of the test equipment and the Fig. 4 represents the plane view of the test equipment from the Fig. 3.

### Examples of embodiment

The device according to the invention for detection of appearance characteristics of the yarn in plane, on basis of which it would be possible to competently predict evenness of fabric or knit made of the yarn, is intended especially for test and/or laboratory usage. This fact is related to high number of operation units of spinning or winding machines and high operation speed of a running yarn drawn-off from a spinning unit of spinning machines or rewound on winding machines. Of course, the device is possible to design as a movable device common for the whole textile machine.

Components of the device are arranged with advantage in the frame **100** by structure of which it corresponds with testing laboratory operation.

For the device the block diagram of which is depicted in the Fig. 1, the yarn **1** intended for testing is stored on the supply reel **2,** which the yarn **1** is drawn-off from by the feed mechanism **3**. Between the supply reel **2** and the feed mechanism **3,** there is the yarn **1** tension sensor **4** arranged in the yarn **1** path.

Behind the feed mechanism **3**, there is the input guide **5** arranged in the yarn **1** path, said input guide **5** is positioned before the scan drum **6** adjacently to its front side **61.** From the back side **62** of the scan drum **6**, the yarn **1** runs through the output guide **7** to the draw-off mechanism **8** and further to the waste receiver **9.**

The scan drum **6**, which is for the example of embodiment vertically arranged and whose cylindrical surface forms the laying surface **63** for the tested yarn **1**, has the outer diameter for yarn **1** turns laying of 100 mm and it rotates at operation speed of 18 rpm. For the example of embodiment, the yarn **1** is wound on the drum in 50 turns.

For the example of embodiment according to the Fig. 2, close to the scan drum **6,** there are two light sources **10** arranged, the light of which falls onto the tract of circumference of the scan drum **6** from two directions **S1, S2** at an angle **α** in the way that it illuminates basically vertical narrow spot **64** in the direction of the surface line of cylindrical surface of the scan drum **6**. In axis of the angle **α**, there is the optical line scanner **11** arranged for scanning the image of a selected number of yarn **1** turns reflected from the spot **64** illuminated by the light sources **10.**

Output of the optical line scanner **11** is connected to input of the computer **12** with the relevant software installed.

Mechanical drive of the device is implemented by means of the electric motor **21** of the supply reel **2,** the electric motor **31** of the feed mechanism **3,** the electric motor **65** of the scan drum **6** and by the electric motor **81** of the draw-off mechanism. The scan drum **6** is coupled to the sync encoder **66.** For the example of embodiment depicted in the Fig. 4, the scan drum **6** is coupled to the driving electric motor **65** via the gear belt drive **67.**

Close to the back side **62** of the scan drive **6** is arranged sensor **68** monitoring yarn **1** wrapping height **V** on the scan drum **6.**

The device is further equipped with the central control unit **13** which is coupled to the electric motors **21, 31, 65, 81** of drives of the supply reel **2,** the feed mechanism **3,** the scan drum **6** and the draw-off mechanism **8.** The control unit **13** is also coupled to the yarn **1** tension sensor **4,** the optical line scanner **11,** the light source **10,** the sensor **68** monitoring yarn **1** wrapping height **V** on the scan drum **6,** the computer **12** and the encoder **66.**

The device according to the invention is schematically depicted in the Fig. 3 and 4 in testing state design for a testing laboratory operation. In the Fig. 3, there is the assembly frame **100** formed from the assembly table **101** with the vertical clamping plate **102,** on the face side of which, there are arranged successively: the supply reel **2,** the yarn **1** tension sensor **4,** the feed mechanism **3,** the yarn **1** input guide **5** and the scan drum **6** with vertical axis at the bottom end of which, there is the encoder **66** arranged. To the left of the scan drum **6,** there is the draw-off mechanism **8** arranged in the vertical plate **102** and under it, below level of the assembly table **101,** there is embedded the waste receiver **9** for the yarn **1** that ran through the device. The waste receiver **9** is possible to replace with a winding reel in cases, where it is useful to use the yarn **1,** after passing the device, for further testing and the like.

To the right of the clamping plate **102,** on the assembly table **101,** there is the computer **12** placed, under which the control unit **13** is situated.

In the ground plan Fig. 4, there are electric motors depicted which are mounted, for the example of embodiment, on the reverse side of the clamping plate **102.** In the direction from right to left, there are the electric motor **21** of the supply reel **2,** the electric motor **31** of the feed mechanism **3,** the electric motor **65** of the scan drum **6,** which are connected via the gear belt drive **67,** and the electric motor **81** of the draw-off mechanism **8.**

After inserting the yarn **1** to its path, inclusive of automatic creation of appropriate turn number on the scan drum **6,** the electric motors **21, 31, 65, 81** of drives are started by means of the control unit **13.** During the device operation, the feed mechanism **3** and the scan drum **6** have a constant speed, so the yarn **1** is lead onto the scan drum **6** at a constant speed. Due to the fact that the winding of the supply reel **2** is usually conical with a cross winding and in addition outer diameter of the winding is becoming smaller in the course of yarn **1** unwinding, it is necessary to control revolutions of the supply reel **2.** The yarn **1** tension sensor **4** serves here as a feedback. When yarn **1** tension decreases, the yarn **1** tension sensor **4** sends an impulse to the control unit **13** to decrease speed of the supply reel **2** and vice versa, when yarn **1** tension increases it sends an impulse to increase speed of the supply reel **2.** The control unit **13** synchronizes yarn **1** unwinding from the supply reel **2,** yarn **1** feeding by the feed mechanism **3** to the front side **61** of the scan drum **6** and scan drum **6** turning, while the sync encoder **66** generates synchronization pulses to set a count of lines scanned by the optical line scanner **11** per one revolution of the scan drum **6.** At the same time, device operation is controlled in the way that the yarn **1** moves smoothly in the required number of turns in the area of the optical line scanner **11,** so a risk of break of the monitored yarn **1** is reduced. At the steady operation state of the device, speed of the yarn **1,** coming onto the scan drum **6** near its front side **61,** is basically the same as speed at which the yarn **1** is drawn-off from the scan drum **6** near its back side **62.** The yarn **1** is with advantage laid on the scan drum **6** with a pitch of helix bigger than diameter of the yarn **1.** The helix pitch is possible to set according to the type of the monitored yarn. The gap between individual turns enables undistorted displaying of yarn **1** diameter changes, hairiness and the like.

The number of yarn **1** turns on the scan drum **6** is monitored by the wrapping height **V** sensor **68.** The height **V** is pre-set for the chosen monitoring mode and because it changes only negligibly during stabilized operation of the device, the number of turns does not change in the monitored area.

Scanned images of parallel yarn **1** sections are recorded by the computer **12** according to assigned software, particularly with respect to appearance of the scanned spot **64.** After arranging images of the scanned spots **64** side by side, the overall image of appearance of the yarn in plane is acquired that is close to appearance of the yarn **1** in plane of fabric or knit. Unevenness of images of the scanned spot **64** caused by defects of the yarn, which are represented by naps, foreign particles, colour changes, sudden changes of yarn diameter and the like, provides very good representation of evenness of fabric made of the evaluated yarn. The image of appearance of the yarn in plane is then possible to further evaluate. For example, from the acquired image, it is possible to measure basic yarn parameters, such as e.g. yarn diameter and its changes, twist count per length unit, hairiness and others.

It is obvious that the goal of presented drawings and description of the device is to contribute to clear explanation of its structure and function. The purpose is not to reduce scope of protection, which is defined by the attached claims. It is also obvious that the device is possible to modify in scope of the claims by a person skilled in the art.

A substantial advantage of the method and the device for running yarn **1** monitoring is that it is possible to detect appearance of many sections of one yarn, distant one from another by the length of one turn of the scan drum **6,** at the same time. This brings possibility to instantly and objectively assess plane appearance of number of yarn **1** sections, or real resulting fabric composed from the turns of the same yarn placed side by side in the described manner. In combination with use of conventional computer technology, it is possible to very quickly acquire comparison of the monitored yarn with the standard, or it is possible to compare appearance and/or quality of yarns produced by different technologies, from different materials and suchlike, and to further evaluate the image of appearance of the yarn. Besides that, the device is also possible to use for detection of usually monitored properties of the yarn, particularly due to assessment of yarn's quality. Yet, it is neither the principle nor the purpose of the method and the device according to this invention.

### List of referential markings

- 1: yarn
- 2: supply reel
- 3: feed mechanism
- 4: yarn tension sensor
- 5: input guide
- 6: scan drum
- 7: output guide
- 8: draw-off mechanism
- 9: waste receiver (of the yarn passed the device)
- 10: light source
- 11: line scanner
- 12: computer
- 13: control unit
- 21: electric motor (of a supply reel drive)
- 31: electric motor (of a feed mechanism drive)
- 61: front side of the scan drum
- 62: back side of the scan drum
- 63: yarn laying surface (on the scan drum)
- 64: spot (illuminated by the light source and scanned by the scanner)
- 65: electric motor (of a scan drum drive)
- 66: sync encoder
- 67: gear belt drive
- 68: yarn wrapping height sensor (on the scan drum)
- 81: electric motor (of a draw-off mechanism drive)
- 100: frame
- 101: assembly table
- 102: clamping plate of the casing
- S1: direction of the incident light
- S2: direction of the incident light
- V: yarn wrapping height on the scan drum
- α: angle (between directions of the incident light)

## Claims

1. A method for detection of the appearance characteristics of a yarn (1) in a plane containing a row of sections of said yarn (1), that are arranged side by side next to each other **characterized in that** the yarn (1) is in a controlled manner continually drawn-off from a supply reel (2) by a feed mechanism (3), and is wound in a spiral made of a number of turns on a cylindrical yarn laying surface (63) of a rotary scan drum (6) and is subsequently lead away from the cylindrical yarn laying surface (63) of said rotary scan drum (6) by a draw-off mechanism (8), whereas a light source (10) illuminates the turns of the yarn (1) on the cylindrical yarn laying surface (63) of said scan drum (6) and a line scanner (11) which is coupled to a computer (12) scans images of spots (64), the parallel yarn (1) turns run in one layer on the cylindrical yarn laying surface (63) of the scan drum (6), and whereas after arranging the images of the scanned spots (64) side by side, the overall image of the appearance of the yarn (1) in a plane that is close to the appearance of the yarn (1) in a plane of a real fabric or knit is acquired by the computer (12).

2. The method according to claim 1, **characterized in that** for yarn (1) motion, at least one motor drive in the yarn (1) path before the scan drum (6), a motor drive of the scan drum (6), and at least for certain time, one motor drive in the yarn (1) path behind the scan drum (6), are provided.

3. The method according to claim 2, **characterized in that** the scan drum (6) is driven at constant speed and, at the same time, tension of the incoming yarn (1) in the area between the yarn supply and the scan drum is kept constant by controlling of supply reel (2) speed.

4. The method according to any of foregoing claims, **characterized in that** the yarn (1) is wound on the scan drum (6) in a helix, the pitch of which is bigger than the diameter of the wound yarn (1).

5. The method according to any of foregoing claims, **characterized in that** information of the scanned image is sourced to a computer (12), where it is processed.

6. A device for detection of appearance characteristics of a yarn (1) in a plane containing a row of sections of the yarn (1) **characterized in that** it comprises a supply reel (2) with yarn (1), a feed mechanism (3) of the yarn (1) for drawing-off the yarn from the supply reel (2) and for feeding the yarn (1) onto a cylindrical yarn laying surface (63) of a rotary scan drum (6), which is coupled to a drive (65), the yarn (1) is wound in a spiral made of a number of parallel turns on the cylindrical yarn laying surface (53) of said drum (6) and is lead away from the cylindrical yarn laying surface (63) of said drum (6) by a draw-off mechanism (8) arranged behind the scan drum (6), whereas adjacent to the circuit of the scan drum (6) there are arranged a light source (10) and an optical line scanner (11) of reflected light, which is coupled with a computer (12) and scans images of spots whereas after arranging the images of the scanned spots (64) side by side, the overall image of the appearance of the yarn (1) in a plane that is close to the appearance of the yarn (1) in a plane of a real fabric or knit is acquired by the computer (12).

7. The device according to claim 6, **characterized in that** the means for the yarn (1) feeding is represented by the feed mechanism (3) coupled to a driving electric motor (31) and the means for the yarn (1) drawing-off is represented by the draw-off mechanism (8) coupled to a driving electric motor (81).

8. The device according to claim 6 or 7, **characterized in that** the light source (10), the line scanner (11), an electric motor (21) for driving the supply reel (2), an electric motor (31) for driving the feed mechanism, an electric motor (81) for driving the draw-off mechanism (8), the electric motor (65) of the scan drum (6), a sync encoder (66), a yarn tension sensor (4) and a wrapping height (V) sensor (68) are connected to a control unit (13) which is linked to the computer (12).

## Patentansprüche

1. Verfahren zur Ermittlung der Aussehenseigenschaften des Garns (1) in der Fläche, die eine Reihe der nebeneinander parallel laufend angeordneten Abschnitte dieses Garns aufweist, **dadurch gekennzeichnet, dass** das Garn (1) durch ein gesteuertes Verfahren mittels einer Zuführvorrichtung aus einer Vorlagespule (2) kontinuierlich abgezogen wird, wobei es in einer Spirale, die durch eine Vielzahl der Wicklungen gebildet wird, auf eine walzenförmige Auflagefläche (63) der Beobachtungstrommel (6) aufgewickelt wird, wonach es aus der walzenförmigen Auflagefläche (63) dieser Beobachtungstrommel (6) durch eine Abzugsvorrichtung (8) abgezogen wird, wobei die Lichtquelle (10) die Garnwicklungen auf der walzenförmigen Auflagefläche (63) der Beobachtungstrommel (6) beleuchtet, wobei der Zeilensensor (11), der mit einem Rechner (12) gekoppelt ist, die Flächen (64) der parallel laufenden Wicklungen des Garns (1) einer Schicht auf der walzenförmigen Auflagefläche (63) der Beobachtungstrommel (6) abtastet, von denen nach der Anordnung der Bilder der eingescannten Flächen nebeneinander mittels eines Rechners (12) ein Gesamtbild des Aussehens des Garns (1) gewonnen wird, das sich dem Aussehen des Garns (1) in der Fläche vom tatsächlichen Gewebe oder Gestrick nähert.

2. Verfahren nach dem Anspruch 1, **dadurch gekennzeichnet, dass** zur Bewegung des Garns (1) auf das Garn (1) mit mindestens einem motorischen Antrieb in der Bahn des Garns (1) vor der Beobachtungstrommel (6), mit dem motorischen Antrieb der Beobachtungstrommel (6), und mindestens für bestimmte Zeit mit einem motorischen Antrieb in der Bahn des Garns (1) hinter der Beobachtungstrommel (6) gewirkt wird.

3. Verfahren nach dem Anspruch 2, **dadurch gekennzeichnet, dass** die Beobachtungstrommel (6) mit konstanter Drehzahl angetrieben wird, wobei die Spannung in dem zugeführten Garn (1) im Bereich zwischen seiner Quelle und der Beobachtungstrommel durch eine konstante Drehzahlsteuerung der Vorlagespule (2) gehalten wird.

4. Verfahren nach einem der vorangehenden Ansprüche, **dadurch gekennzeichnet, dass** das Garn (1) auf die Beobachtungstrommel (6) in einer Wendel aufgewickelt wird, deren Steigung größer als der Durchmesser des aufgewickelten Garns (1) ist.

5. Verfahren nach einem der vorangehenden Ansprüche, **dadurch gekennzeichnet, dass** die Informationen über das abgetastete Bild in einen Rechner (12) zugeführt werden, in dem diese verarbeitet werden.

6. Einrichtung zur Ermittlung der Aussehenseigenschaften des Garns (1) in der Fläche, die eine Reihe der nebeneinander parallel laufend angeordneten Abschnitte dieses Garns aufweist, **dadurch gekennzeichnet, dass** sie Vorlagespule (2) mit einem Vorrat am Garn (1), Zuführvorrichtung (3) des Garns (1) auf eine walzenförmige Auflagefläche (63) der Beobachtungstrommel (6) aufweist, die mit einem Antrieb (65) gekoppelt ist, das Garn (1) in einer Spirale, die durch eine Vielzahl der parallel laufenden Wicklungen gebildet wird, auf einer walzenförmigen Auflagefläche (63) dieser Trommel (6) aufgewickelt wird und aus der walzenförmigen Auflagefläche (63) der Trommel (6) durch eine Abzugsvorrichtung abgezogen wird, die hinter der Beobachtungstrommel (6) angeordnet ist, wobei in der Nachbarschaft der Beobachtungstrommel (6) eine Lichtquelle (10) und ein optischer Zeilensensor (11) des Reflexionslichtes angeordnet sind, der mit einem Rechner (12) gekoppelt ist und die Bilder der Flächen abtastet, wobei nach der Anordnung der Flächen nebeneinander mittels des Rechners (12) ein Gesamtbild des Aussehens des Garns (1) gewonnen wird, das sich dem Aussehen des Garns (1) in der Fläche vom tatsächlichen Gewebe oder Gestrick nähert.

7. Einrichtung nach dem Anspruch 6, **dadurch gekennzeichnet, dass** das Zuführmittel des Garns (1) durch eine Zuführvorrichtung (3) gebildet wird, die mit einem Antriebselektromotor (31) gekoppelt ist, und das Abzugsmittel des Garns (1) durch eine Abzugsvorrichtung (8) gebildet wird, die mit einem Antriebselektromotor (81) gekoppelt ist.

8. Einrichtung nach dem Anspruch 6 oder 7, **dadurch gekennzeichnet, dass** Lichtquelle (10), Zeilensensor (11), Elektromotor (21) des Antriebs der Vorlagespule (2), Elektromotor (31) des Antriebs der Zuführvorrichtung (3), Elektromotor (81) des Antriebs der Abzugsvorrichtung (8), Elektromotor (65) des Antriebs der Beobachtungstrommel (6), Synchronisierungsencoder (66), Sensor (4) der Spannung im Garn und Sensor (68) der Wicklungshöhe (V) mit einer Steuereinheit (13) gekoppelt sind, mit der weiter ein Rechner (12) gekoppelt ist.

## Revendications

1. Procédé de la détection des caractéristiques d'aspect du fil (1) dans la surface contenante une série des sections de ce fil disposées parallèlement, **caractérisé en ce que** le fil (1) est de manière contrôlée soutiré en continu par le mécanisme d'alimentation à partir de la bobine d'alimentation (2), tandis qu'il est enroulé en spirale formée par la pluralité des spires sur la surface de pose cylindrique (63) du tambour de contrôle (6), après quoi de la surface de pose cylindrique (63) de ce tambour de contrôle (6) le fil est tiré par le mécanisme de retirage (8) tandis que la source de lumière (10)) éclaire les spires du fil sur la surface de pose cylindrique (63) du tambour de contrôle (6), tandis que le capteur linéaire (11) couplé à l'ordinateur (12) détecte les facettes (64) des spires parallèles du fil (1) d'une couche de la surface de pose cylindrique (63) sur le tambour de contrôle (6) à partir desquels après la dispositon des images des facettes numérisées l'une à côté de l'autre par l'intermédiaire de l'ordinateur (12) on obtient l'apparition de l'image globale du fil (1) qui se rapproche de l'apparition du fil (1) dans la surface réelle du tissu ou du tricot.

2. Procédé selon la revendication 1, **caractérisé en ce que** le mouvement du fil (1) est provoqué sur le fil (1) au moins par un entraînement de moteur dans le chemin du fil (1) devant le tambour de contrôle (6) par un entraînement de moteur du tambour de contrôle (6) et au moins pendant un certain temps par un entraînement de moteur dans le chemin du fil (1) derrière le tambour de contrôle (6).

3. Procédé selon la revendication 2, **caractérisé en ce que** le tambour de contrôle (6) est entraîné à une vitesse constante tandis que la tension dans le fil amené (1) dans la région entre sa source et le tambour de contrôle est maintenue par une commande de vitesse constante de la bobine d'alimentation (2).

4. Procédé selon l'une quelconque des revendications précédentes, **caractérisé en ce que** le fil (1) est enroulé sur le tambour de contrôle (6) dans une hélice dont le pas est supérieur au diamètre du fil (1).

5. Procédé selon l'une quelconque des revendications précédentes, **caractérisé en ce que** l'information concernant l'image numérisée est envoyée à l'ordinateur (12) dans lequel elle est traitée.

6. Dispositif pour la détection des caractéristiques d'aspect du fil (1) dans la surface contenante une série des sections de ce fil disposées parallèlement **caractérisé en ce qu'**il comprend une bobine d'alimentation (2) avec le réserve du fil (1), du mécanisme (3) pour alimentation le fil (1) sur la surface de pose cylindrique (63) du tambour de contrôle (6) qui est couplé avec l'entraînement (65), le fil (1) est enroulé en spirale comprenant une pluralité de spires parallèles sur une surface de pose cylindrique (63) du tambour (6) et il est retiré d'une surface de pose cylindrique (63) du tambour (6) par le mécanisme de retirage disposé pour le tambour de contrôle (6), tandis que dans le voisinage du tambour de contrôle (6) est disposée une source de lumière (10) et le capteur linéaire optique (11) de la lumière réflétée, qui est couplé avec un ordinateur (12) et prend des images des facettes, tandis qu'après l'arrangement des facettes l'un à côté de l'autre par l'intermédiaire de l'ordinateur (12) on obtient l'apparition de l'image globale du fil (1) qui se rapproche de l'apparition du fil (1) dans la surface réelle du tissu ou du tricot.

7. Dispositif selon la revendication 6, **caractérisé en ce que** le moyen d'alimentation du fil (1) est formé par un mécanisme alimentaire (3) couplé au moteur électrique d'entraînement (31) et le moyen pour le retirage du fil (1) est formé par le mécanisme de retirage (8) couplé au moteur électrique d'entraînement (81).

8. Dispositif selon la revendication 6 ou 7, **caractérisé en ce que** la source de lumière (10), le capteur linéaire (11), le moteur électrique (21) de l'entraînement de la bobine d'alimentation (2), le moteur électrique (31) de l'entraînement du mécanisme pour amener le fil (3), le moteur électrique (81) de l'entraînement du mécanisme de retirage (8), le moteur électrique (65) du tambour de contrôle (6), l'encodeur de synchronisation (66), le capteur (4) de la tension dans le fil et le capteur (68) de la hauteur (V) de l'enroulement sont connectés à l'unité de commande (13), avec lequel l'ordinateur (12) est en outre couplé.
